(19) Europäisches Patentamt

European Patent Office

Office européen des brevets

(11) **EP 0 377 886 B1**

(12) **EUROPÄISCHE PATENTSCHRIFT**

(45) Veröffentlichungstag und Bekanntmachung des Hinweises auf die Patenterteilung:
**20.03.1996 Patentblatt 1996/12**

(51) Int Cl.[6]: **G06F 5/06**

(21) Anmeldenummer: **89123790.1**

(22) Anmeldetag: **22.12.1989**

(54) **Anordnung zum Übertragen von in mehrere Teile unterteilten Datenwörtern**

Arrangement for the transfer of data words subdivided into several parts

Montage pour le transfert de mots de données subdivisés en plusieurs parties

(84) Benannte Vertragsstaaten:
**AT CH DE ES FR GB IT LI SE**

(30) Priorität: **12.01.1989 DE 3900792**

(43) Veröffentlichungstag der Anmeldung:
**18.07.1990 Patentblatt 1990/29**

(73) Patentinhaber: **SIEMENS AKTIENGESELLSCHAFT**
**D-80333 München (DE)**

(72) Erfinder:
- **Flämig, Hartmut**
  **D-7500 Karlsruhe (DE)**
- **Pfatteicher, Werner**
  **D-7507 Pfinztal (DE)**
- **Wölfel, Ulrich**
  **D-6729 Hagenbach (DE)**

(56) Entgegenhaltungen:
- **PATENT ABSTRACTS OF JAPAN vol. 13, no. 587 (P-983)(3935) 25. Dezember 1989**
- **IBM TECHNICAL DISCLOSURE BULLETIN. Bd. 22, Nr. 1, Juni 1979, NEW YORK US Seiten 299 - 301; PERZBORN J.J.: 'Buffer overrun detection'**
- **ELECTRONIC DESIGN. Bd. 34, Nr. 18, August 1986, HASBROUCK HEIGHTS, NEW JERSEY Seiten 104 - 109; O'BRIEN J. ET AL.: 'Fifo registers waste no time refereeing data transfers'**
- **PROCEEDINGS OF THE 4TH ANNUAL SYMPOSIUM ON COMPUTER ARCHITECTURE März 1977, LONG BEACH, US Seiten 159 - 164; PARKER A.C. ET AL.: 'Hardware/software tradeoffs in a variable word width, variable queue length buffer memory'**

**Beschreibung**

Die Erfindung betrifft eine Anordnung zum Übertragen von in mehrere Teile (Teilwörter) unterteilten Datenwörtern zwischen zwei Steuereinheiten gemäß dem Oberbegriff des Anspruchs 1.

In Datenverarbeitungsanlagen werden häufig Steuereinheiten eingesetzt, die mit unterschiedlichen Datenwortbreiten arbeiten. Z. B. kommt es in Automatisierungssystemen vor, daß die Daten von Signalformern, wie Analog-Digital-Umsetzern, Digital-Analog-Umsetzern, Zeitgebern, Zählern und dergleichen, eine Wortbreite aufweisen, die größer als die ist, mit der der verarbeitende Zentralprozessor arbeitet. Ein einzelnes Wort solcher Signalformer kann vier Byte belegen, wohingegen die interne Verarbeitungsbreite der Zentraleinheit auf zwei Byte begrenzt ist. Auch ist im allgemeinen die Übertragungsleitung zwischen Zentralprozessor und Signalformer so bemessen, daß die Datenwörter nicht als Ganzes parallel, sondern unterteilt, z. B. byteweise, übertragen werden müssen. Allgemein tritt dieses Problem bei der Anpassung der Schnittstelle von unterschiedlichen Geräten auf, die mit unterschiedlicher Geschwindigkeit und/oder Wortbreiten arbeiten und bei denen Datenwörter unterteilt übertragen werden. Zur Entkopplung von Datenwegen unterschiedlicher Breite und Übertragungsgeschwindigkeit setzt man Pufferspeicher ein, in welche Übertragungssteuerungen die zu übertragenden Daten einschreiben und auslesen. Es kann dann der Fall eintreten, daß die eine Steuereinheit ein Wort nur teilweise eingeschrieben hat und die andere Steuereinheit darauf das gesamte Wort abruft, bevor die erste Einheit das Wort vollständig einschreiben konnte. Die zweite Steuereinheit empfängt dann ein verfälschtes Wort. Entsprechend tritt ein Fehler auf, wenn die eine Steuereinheit einen ersten Wortteil aus einem Speicherbereich des Pufferspeichers abruft und die andere Einheit ein vollständiges Wort in denselben Speicherbereich einträgt, bevor die erste Steuerung den zweiten Wortteil abrufen kann. Diese Schwierigkeit könnte dadurch behoben werden, daß ein Wort erst dann als gültig erklärt wird, wenn die Anzahl der Zugriffe multipliziert mit der Teilwortbreite gleich der Gesamtwortbreite ist, daß also z. B. bei einer Wortbreite von zwei Byte das Wort erst dann als gültig erklärt wird, wenn zweimal zugegriffen ist. Dieses Verfahren ist aber dann ungeeignet, wenn die Wortbreite variabel ist. Auch könnte man zusammengehörende Informationen mit einer Kennung versehen. Werden dann nicht zusammengehörende Informationen übertragen, erkennt eine in der empfangenden Einheit untergebrachte Auswertelogik den Fehler. Dieses Verfahren hat den Nachteil, daß zusätzliche Informationen übertragen werden müssen und daß die Auswertung in jedem einzelnen Datenendgerät, z. B. Signalformer, erfolgen muß.

In der älteren Anmeldung DE A1 37 27 434 ist vorgeschlagen, die zu einem Datenwort gehörenden Teilwörter in den Zellen des Pufferspeichers mit aufeinanderfolgenden Adressen zu speichern. In ein Adressenregister wird der Adressenbereich eingetragen, in den die eine Einheit ein Datenwort einschreibt oder aus dem sie ein Wort ausliest. Ein Adressenvergleicher vergleicht die von der anderen Einheit zugeführten Adressen mit dem im Adressenregister enthaltenen Adressenbereich. Eine Logikschaltung, die an den Adressenvergleicher angeschlossen ist, gibt ein Speichersperrsignal und/oder ein Kollisionssignal ab, wenn die von der anderen Einheit zugeführte Adresse in den im Adressenregister gespeicherten Adressenbereich fällt. Eine solche Anordnung hat den Nachteil, daß ihre Hardware an jede Wortbreite angepaßt werden muß. Da das Adressenregister dieser Anordnung der Größe des Adressenbereichs, also der Anzahl der Teilwörter je Datenwort, angepaßt ist, ist eine Anpassung der Anordnung an unterschiedlich große Datenwörter nur mit einer Hardware-Änderung möglich.

Der vorliegenden Erfindung liegt die Aufgabe zugrunde, eine Anordnung der im Oberbegriff des Anspruchs 1 angegebenen Art zu schaffen, die einfach auf unterschiedlich breite Datenwörter eingestellt werden kann.

Erfindungsgemäß wird diese Aufgabe mit den im kennzeichnenden Teil des Anspruchs 1 angegebenen Maßnahmen gelöst.

Die neue Anordnung eignet sich zum Übertragen von Daten zwischen zwei oder mehr Einheiten, wobei jeweils eine den Zugriff der anderen Einheiten zum Pufferspeicher steuert. Eine bevorzugte Anwendung sind Bussysteme, z. B. Prozeßsteuer- und -leitsysteme mit einem Systembus, über den Daten zwischen peripheren Einheiten und einem oder mehreren Zentralprozessoren übertragen werden. Periphere Einheiten sind z. B. Analog-Digital-Umsetzer, Digital-Analog-Umsetzer, Positionssteuerungen, Anzeigebaugruppen und dergleichen. Der Pufferspeicher stellt dann die Verbindung zwischen dem Systembus und dem internen Bus der peripheren Einheiten her. Der Maskiercode kann ohne Verändern der Anordnung geändert werden, ist also leicht einstellbar. Die Steuerungen unterschiedlicher Geräte können übereinstimmend aufgebaut sein. Es ist daher auch möglich, mit derselben Steuereinheit Daten unterschiedlicher Wortbreite zu senden und zu empfangen, indem von einer Datenübertragung zur nächsten der Maskiercode neu eingestellt wird.

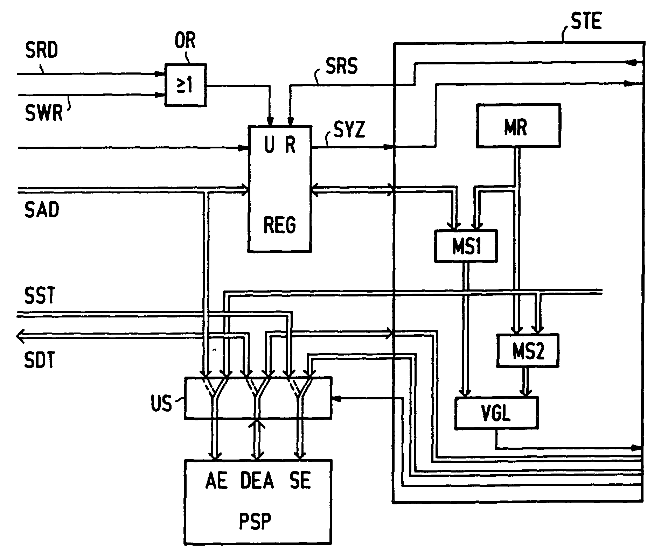

Anhand der Zeichnung wird im folgenden an einem Ausführungsbeispiel die Erfindung näher beschrieben und erläutert.

Mit STE ist eine Steuereinheit eines peripheren Gerätes bezeichnet, zwischen der und einer nicht dargestellten anderen Steuereinheit, z. B. einem Zentralprozessor, Daten übertragen werden sollen. Die Einheiten sind Bestandteile eines Datenverarbeitungssystems, z. B. eines Prozeßleitsystems, in dem die peripheren Einheiten Analog-Digital-Umsetzer, Digital-Analog-Umsetzer, anzeigende Einheiten und dergleichen sein können. Ein Systembus stellt die Verbindung zwischen den Einheiten her. Er enthält System-Datenleitungen SDT, über welche Teilwörter der zu übertragenden Datenwörter übertragen werden. Steuerdaten werden über System-Steuerleitungen SST und Pufferspeicheradressen über System-Adreßleitungen SAD übertragen. Die Wortbreite der von oder zu den peripheren Einheiten übertragenen Daten ist je nach Art der peripheren Einheit unterschiedlich, auch kann deren Taktfrequenz verschieden sein. Es ist daher zur Anpassung des System-Datenbusses an den internen Bus der peripheren Steuereinheit ein Pufferspeicher PSP, zweckmäßig ein sogenanntes Dual-Port-RAM, vorgesehen, der einerseits an den Systembus, andererseits an den internen Bus der peripheren Steuereinheit angeschlossen ist. Im Falle eines Schreibbefehls gibt der Zentralprozessor ein log. "1"-Signal auf eine Leitung SRD, im Falle eines Lesebefehls auf eine Leitung SWR. Die Signale auf den Leitungen SRD, SWR werden einem ODER-Glied OR zugeführt, an dessen Ausgang ein Eingang U eines Registers REG angeschlossen ist. Ist eines der beiden Signale log. "1", wird dies vom Register REG über eine Leitung SYZ der Steuereinheit STE gemeldet. Die jeweilige über die System-Adreßleitungen SAD übertragene Adresse des Pufferspeichers wird in ein Register REG eingetragen. Will die Steuereinheit STE ein Datenwort in den Pufferspeicher PSP einschreiben oder daraus lesen, prüft sie zunächst, ob sie auf denselben Adressenbereich wie der Zentralprozessor zugreift. Der Adressenbereich umfaßt eine solche Anzahl von Adressen, wie zur Aufnahme der Teilwörter eines Datenwortes erforderlich sind. Für die Prüfung wird die im Register REG enthaltene Adresse in einer Maskierschaltung MS1 mit einem Maskiercode verknüpft, der in ein Maskenregister MR eingetragen ist. Entsprechend wird die in der peripheren Einheit erzeugte Adresse, mit der auf den Pufferspeicher PSP zugegriffen werden soll, in einer Maskierschaltung MS2 mit dem Maskiercode verknüpft. Ein Vergleicher VGL prüft, ob die Maskierergebnisse übereinstimmen. Dies ist dann der Fall, wenn die periphere Einheit auf den Adressenbereich für ein Datenwort zugreifen will, auf den der Zentralprozessor schon Zugriff hat. Der Umschalter US bleibt dann in der in der Figur gestrichelt gezeichneten Stellung, in der die Datenein- und -ausgänge DEA, die Adreßeingänge AE und die Steuereingänge SE des Pufferspeichers PSP mit dem Systembus verbunden sind. Ist die Datenübertragung über den Systembus beendet, wird das Signal auf der Leitung SRD bzw. SWR und damit das Signal auf der Leitung SYZ zurückgenommen, und die periphere Steuereinheit STE kann auf den Pufferspeicher PSP zugreifen, indem sie den Umschalter US umschaltet.

Will der Zentralprozessor auf den Pufferspeicher PSP zugreifen, während die periphere Einheit Zugriff hat, werden ebenfalls die Adressen, mit denen zugegriffen wird, maskiert und die Ergebnisse miteinander verglichen. Sind diese gleich, wird der Zugriff für den Zentralprozessor gesperrt, der dann nach einer vorgegebenen Zeit einen erneuten Zugriff versucht. Stellt der Vergleicher fest, daß der Zentralprozessor und die periphere Einheit auf unterschiedliche Speicherbereiche zugreifen, erhalten beide gleichzeitig Zugriff. Gleichzeitiger Zugriff bedeutet, daß die eine Einheit ein Teilwort auch dann eintragen oder lesen kann, wenn die andere Einheit die Übertragung des gesamten Datenwortes noch nicht abgeschlossen hat. Ein gleichzeitiger Zugriff braucht nicht verhindert werden, wenn beide Einheiten ein Datenwort aus dem Pufferspeicher lesen wollen.

Ein wesentlicher Vorteil der neuen Anordnung ist, daß, obwohl die Datenwortbreiten für unterschiedliche periphere Einheiten verschieden sind, dieselbe Anordnung verwendet werden kann und daß lediglich der Maskiercode an die jeweilige Datenwortbreite angepaßt werden muß. Man kann sogar mit ein und derselben Steuereinheit unterschiedlich breite Datenwörter verarbeiten. Hierzu ist allerdings Voraussetzung, daß die Steuereinheit die Breite des jeweils eingehenden Datenwortes kennt. Dies kann dadurch erreicht werden, daß jeder Datenwortbreite ein bestimmter Pufferspeicherbereich zugeordnet wird. Die Zuordnung kann in einem Festwertspeicher hinterlegt werden. Das Maskenregister ist dann nicht mehr erforderlich. Die von der Steuereinheit erzeugten Adressen für den Pufferspeicher werden dem Festwertspeicher zugeführt, der darauf den zugehörigen, in der adressierten Zelle enthaltenen Maskiercode an die beiden Maskierschaltungen MS1, MS2 abgibt.

Der Maskiercode m kann nach der Gleichung bestimmt werden:

$$m = A - (N - 1),$$

worin A die größte Adresse des Pufferspeichers PSP und N die Anzahl der Teilwörter je Wort ist. Zweckmäßig ist N eine ganzzahlige Potenz von 2. Die Maskierschaltungen MS1, MS2 können dann UND-Glieder sein. Ist z. B. die Kapazität des Pufferspeichers 1023 Byte, d. h. 1023 ist die größte Adresse, und beträgt die Datenwortlänge vier Byte, dann ist der Maskiercode 1023 - (4 - 1) = 1020 oder 3FC(H).

**Patentansprüche**

1. Anordnung zum Übertragen von in mehrere Teilwörter unterteilten Datenwörtern zwischen einer ersten und einer zweiten Steuereinheit mit einem Pufferspeicher (PSP), in den die aufeinanderfolgend übertragenen Teilwörter unter je einer Adresse von der jeweils die Datenwörter abgebenden Steuereinheit eingeschrieben und aus dem die Datenwörter von der jeweils empfangenden Steuereinheit ausgelesen werden, wobei zusammengehörende Teilwörter in Zellen des Pufferspeichers (PSP) mit aufeinanderfolgenden Adressen gespeichert werden und wobei der Zugriff zum Pufferspeicher (PSP) für eine Steuereinheit gesperrt wird, wenn sie auf Speicherzellen zugreift, auf welche die andere Steuereinheit schon Zugriff hat, **dadurch gekennzeichnet** daß die von den Steuereinheiten abgegebenen Pufferspeicheradressen mit einem der Anzahl der Teilwörter des jeweiligen Datenwortes entsprechenden Maskiercode maskiert und die gleichzeitig auftretenden Maskierungsergebnisse miteinander verglichen werden und daß bei Gleichheit der Maskierungsergebnisse der Zugriff der später zugreifenden Steuereinheit gesperrt wird.

2. Anordnung nach Anspruch 1, **dadurch gekennzeichnet,** daß der Maskiercode m ist:

$$m = A - (N - 1)$$

(A = maximale Adresse des Pufferspeichers PSP, N = Anzahl der Teilwörter je Datenwort)

und die Maskierschaltungen UND-Glieder sind.

3. Anordnung nach Anspruch 1 oder 2, **dadurch gekennzeichnet,** daß in den Zellen eines Festwertspeichers mehrere Maskiercodes enthalten sind und der Festwertspeicher mit den von einer Steuereinheit abgegebenen Pufferspeicheradressen adressiert ist.

## Claims

1. Arrangement for the transmission of data words divided into several part words between a first and a second control unit with a buffer memory (PSP), into which the successively transmitted part words are written under a respective address by the control unit emitting the data words in each case and from which buffer memory the data words are read by the respectively receiving control unit, with associated part words being stored in cells of the buffer memory (PSP) with successive addresses, and with the access to the buffer memory (PSP) being blocked for a control unit if it accesses memory cells to which the other control unit already has access, characterized in that the buffer-memory addresses emitted by the control units are masked with a masking code corresponding to the number of part words of the respective data word and the simultaneously occurring masking results are compared with each other and in that with equality of the masking results the access of the control unit accessing later is blocked.

2. Arrangement according to claim 1, characterized in that the masking code m is:

$$m = A - (N - 1)$$

(A = maximum address of the buffer memory PSP,

N = number of part words per data word) and the masking circuits are AND-elements.

3. Arrangement according to claim 1 or 2, characterized in that several masking codes are contained in the cells of a read-only memory and the read-only memory is addressed with the buffer-memory addresses emitted by a control unit.

## Revendications

1. Dispositif de transmission de mots de données divisés en plusieurs mots partiels entre une première et une seconde unités de commande, comportant une mémoire tampon (PSP), dans laquelle les mots partiels transmis l'un à la suite de l'autre sont enregistrés à chacun une adresse par l'unité de commande fournissant chacun des mots de données et dans laquelle les mots de données sont lus par l'unité de commande qui les reçoit, des mots partiels de la même catégorie étant mémorisés dans des cellules de la mémoire (PSP) tampon à des adresses se suivant et l'accès à la mémoire tampon (PSP) pour une unité de commande étant bloqué, lorsqu'elle accède à des cellules de mémoire, auxquelles l'autre unité de commande a déjà accès, caractérisé en ce que les adresses de la mémoire tampon fournies par les unités de commande sont masquées par un code de masquage correspondant au nombre de mots partiels du mot de données considéré, les résultats du masquage apparaissant en même temps sont comparés l'un à l'autre et l'accès par l'unité de commande accédant plus tard est bloqué en cas d'égalité des résultats du masquage.

2. Dispositif suivant la revendication 1, caractérisé en ce que le code m de masquage est :

$$m = A - (N - 1)$$

(A = adresse maximum de la mémoire tampon (PSP),

N = nombre des mots partiels par mot de données) et les circuits de masquage sont des circuits ET.

3. Dispositif suivant la revendication 1 ou 2, caractérisé en ce que les cellules d'une mémoire morte comportent plusieurs codes de masquage et la mémoire morte est adressée par les adresses de mémoire tampon fournies par une unité de commande.